# EUROPÄISCHE PATENTANMELDUNG

(11) **EP 1 154 010 A2**
(43) Veröffentlichungstag der Anmeldung: **14.11.2001**
(21) Anmeldenummer: 01110914.7
(22) Anmeldetag: 05.05.2001
(51) Int. Cl.: C10L 3/00, C03B 29/00

(54) **Verfahren zum Betreiben eines Brenners**

(30) Priorität: 09.05.2000 DE 10022594
(71) Anmelder: Linde Gas Aktiengesellschaft, 82049 Höllriegelskreuth (DE)
(72) Erfinder: Schöne, Holger, 85579 Neubiberg (DE)
(74) Vertreter: Gellner, Bernd, Dr.

(57) **Zusammenfassung**

Die Erfindung betrifft ein Verfahren zum zumindest teilweise Erhitzen von Bauteilen oder Werkstücken (2, 3, 4) mit einem Brenner (5), dem Wasserstoff (6) und Sauerstoff (7) zugeführt werden. Zusätzlich wird dem Brenner (5) ein kohlenstoffhaltiges Gas (8) zugeführt.

## Beschreibung

Die Erfindung betrifft ein Verfahren zum zumindest teilweise Erhitzen von Bauteilen oder Werkstücken mit einem Brenner, dem Wasserstoff und Sauerstoff zugeführt werden.

Bei der Herstellung von elektrischen Sicherungen werden mehrere später als Körper der Sicherungen dienende Kunststoffkörper auf einem Träger in einer Reihe angeordnet und durch jeweils zwei senkrechte Drahtstifte, die durch entsprechende Löcher in den Kunststoffkörpern gesteckt werden, auf dem Träger fixiert. Die Drahtstifte, die über die Kunststoffkörper hinausragen, sind an ihrem oberen Ende umgebogen oder besitzen eine Öse, durch die dann der eigentliche Sicherungsdraht gefädelt wird.

Der Sicherungsdraht verbindet in diesem Herstellungsstadium noch lose alle aneinandergereihten Kunststoffkörper und muß daher zum einen jeweils zwischen zwei Kunststoffkörpern durchtrennt werden und zum anderen mit den Drahtstiften verlötet werden. Das Durchtrennen und Verlöten erfolgt üblicherweise mit sogenannten Leistenbrennern, die eine Vielzahl von nebeneinander angeordneten Brenneröffnungen aufweisen, die über eine gemeinsame Zufuhrleitung mit einem Gasgemisch aus Wasserstoff und Sauerstoff versorgt werden.

Die Versorgung der Brenner erfolgt bisher mit Wasserstoff und Sauerstoff, die durch Elektrolyse hergestellt werden. Der Wasserstoff und der Sauerstoff werden vorgemischt und das resultierende Gasgemisch wird dem Brenner zugeführt. Die Leistenbrenner erzeugen im Betrieb viel kleine Wasserstoff-Sauerstoff-Flammen mit einer Flammenlänge von etwa 0,5 bis 2 cm, die nur schwer oder gar nicht zu erkennen sind.

Aus diesem Grund wird das Gasgemisch, bevor es dem Brenner zugeführt wird, durch einen Behälter mit flüssigem Methanol geleitet, wobei der Gasstrom mit geringen Mengen von Methanol versetzt wird. Bei der Verbrennung des Gasgemisches sorgt der im Methanol befindliche Kohlenstoff dafür, daß die Flammen besser sichtbar sind.

Die Versetzung des Gasgemisches mit Methanol ist allerdings sicherheitstechnisch nicht unproblematisch. Bei einer Verstopfung der Brenneraustrittsöffnungen oder beim Schließen von im Brenner vorgesehenen Rückschlagsicherungen baut sich in dem Behälter über dem flüssigen Methanol eine Wasserstoff-Sauerstoff-Atmosphäre mit einem Druck entsprechend dem Zufuhrdruck des Gasgemisches, beispielsweise 1 bis 2 bar, auf und bildet ein explosives Gemisch.

Femer ist die Anreicherung von Methanol in dem Gasgemisch unter anderem abhängig von der Gasgeschwindigkeit und der Verdampfungsrate des Methanols. Der Methanolgehalt in dem Gasgemisch kann dadurch in der Praxis nicht konstant gehalten werden, was sich wiederum auf die Sichtbarkeit der Flammen auswirkt. Je nach Methanolgehalt sind diese dann mehr oder weniger sichtbar. Eine automatische Überwachung des Bearbeitungsprozesses beispielsweise mit Hilfe einer Kamera ist daher kaum möglich.

Der Erfindung liegt daher die Aufgabe zugrunde, ein Verfahren zum Bearbeiten von Werkstücken mit einem Wasserstoff-Sauerstoff-Brenner zu entwickeln, bei dem die oben genannten Nachteile vermieden werden und die Flammen gut sichtbar sind.

Diese Aufgabe wird durch ein Verfahren der eingangs genannten Art gelöst, bei dem dem Brenner zusätzlich ein kohlenstoffhaltiges Gas zugeführt wird.

Erfindungsgemäß wird in dem Brenner Wasserstoff mit Sauerstoff und zusätzlich einem kohlenstoffhaltigen Gas verbrannt. Das kohlenstoffhaltige Gas verbessert die Sichtbarkeit der Flamme beziehungsweise macht, wenn der Brenner mit kleiner Leistung betrieben wird, die Flamme überhaupt erst sichtbar. Das kohlenstoffhaltige Gas kann dem Brenner definiert zugeführt werden, wodurch der Kohlenstoffgehalt in der Flamme vorbestimmt und die Sichtbarkeit der Flamme eingestellt werden kann. Unerwünschte Schwankungen der Helligkeit der Flamme, wie sie bei dem aus dem Stand der Technik bekannten Verfahren, bei dem das Wasserstoff-Sauerstoff-Gemisch durch Methanol geleitet wird, auftreten, werden erfindungsgemäß vermieden.

Vorzugsweise wird der Brenner als vormischender Brenner betrieben, d.h. Wasserstoff und Sauerstoff werden vorgemischt und dem Brenner als Gasgemisch zugeführt. Das kohlenstoffhaltige Gas kann entweder dem Gemisch ebenfalls vorher zugemischt werden oder während der Verbrennung des Wasserstoff-Sauerstoff-Gasgemisches in die Flamme geleitet werden. Hierbei wird insbesondere die erste Variante bevorzugt, d.h. es wird ein Gasgemisch aus Wasserstoff, Sauerstoff und dem kohlenstoffhaltigen Gas hergestellt und dieses Gemisch im Brenner entzündet.

Bevorzugt wird das kohlenstoffhaltige Gas so zugeführt, daß dessen Anteil an der dem Brenner insgesamt zugeführten Gasmenge 0,1 bis 10 Vol-%, bevorzugt 1 bis 5 Vol-%, beträgt. In umfangreichen Untersuchungen hat sich gezeigt, daß bei Einhaltung dieser Wertebereiche die Flamme gut sichtbar ist, die für die Erhitzung bzw. Bearbeitung der Bauteile gewünschten charakteristischen Eigenschaften einer Wasserstoff-Sauerstoff-Flamme aber dennoch erhalten bleiben.

Als kohlenstoffhaltiges Gas kommen insbesondere Erdgas, Methan und/oder Propan in Betracht. Im Zusammenhang mit der Wasserstoff- und Sauerstoffversorgung hat es sich als günstig erwiesen, Wasserstoff und Sauerstoff nicht direkt vor Ort zu produzieren, sondem anliefern zu lassen und aus geeigneten Gasbehältern, insbesondere Druckgasflaschen, dem Brenner zuzuführen.

Die erfindungsgemäße Zuführung von Wasserstoff, Sauerstoff und einem kohlenstoffhaltigen Gas zum Brenner hat noch in einem weiteren Anwendungsbereich, nämlich dem Feuerpolieren von Glasgegenständen, große Vorteile. Gläser, insbesondere Bleigläser und Bleikristallgläser, müssen nach dem Preßformen zur Entfernung von Graten und anderen Oberflächendefekten nachbearbeitet werden. Hierzu wird ein mittels eines Brenners die Glasoberfläche aufgeschmolzen, wodurch die Oberfläche vergleichmäßigt wird. Bisher werden meist Brenner eingesetzt, die mit einem kohlenstoffhaltigen Gas und Sauerstoff betrieben werden. Diese besitzen allerdings eine recht weiche Flamme, die in Ecken, Löcher oder Vertiefungen auf der Glasoberfläche nicht oder nur schwer eindringt. Es ist daher erforderlich, das Glas relativ lange mit dem Brenner zu erwärmen, wobei jedoch, insbesondere bei dünnwandigen Gläsern, die Gefahr besteht, daß das Glas seine Form verliert.

Es ist auch bekannt, Wasserstoff-Sauerstoff-Brenner zu verwenden, da deren Flamme härter ist und auch in tiefe Oberflächenstrukturen vordringen kann. Beim Feuerpolieren mit diesen Brennern wird zwar ein qualitativ gutes Ergebnis erzielt, die Kosten für das Brenngas, d.h. für Wasserstoff, übersteigen jedoch deutlich die Brenngaskosten eines Erdgasbrenners.

Erfindungsgemäß werden nun Wasserstoff und ein kohlenstoffhaltiges Gas gemeinsam mit Sauerstoff verbrannt. Die ergänzende Zufuhr des kohlenstoffhaltigen Gases dient in diesem Fall nicht der Verbesserung der Sichtbarkeit der Flammen, bei der die Flammencharakteristik ansonsten im wesentlichen unverändert bleibt. Im Gegenteil, bei dieser Anwendung werden Flammentemperatur und Flammenausbreitung gezielt verändert, so daß eine Flamme erzeugt wird, die an die Oberflächenstruktur des zu polierenden Glaskörpers angepaßt ist.

Der Anteil des kohlenstoffhaltigen Gases an der Gesamtgasmenge wird in diesem Fall höher als bei der erstgenannten Anwendung gewählt und liegt vorzugsweise zwischen 3 und 30%, bevorzugt zwischen 10 und 20% der gesamten dem Brenner zugeführten Gasmenge. Die Gase Wasserstoff, Sauerstoff und das kohlenstoffhaltige Gas werden vorzugsweise vorgemischt und zu dem Brenner als Gasgemisch geleitet.

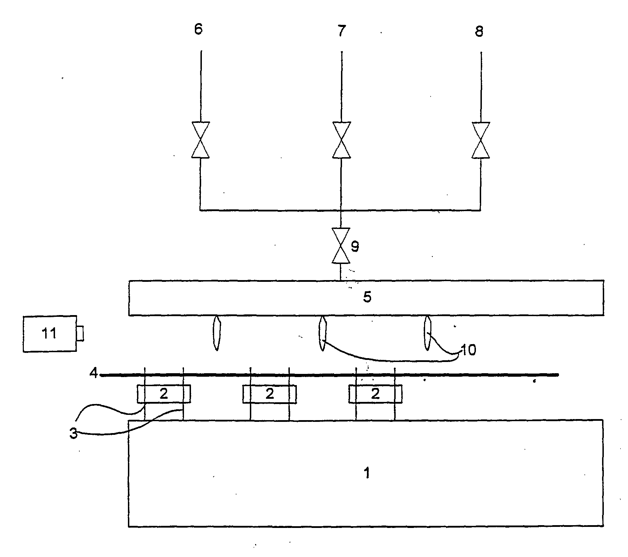

Die Erfindung sowie weitere Einzelheiten der Erfindung werden im folgenden anhand von dem in der Zeichnung dargestellten Ausführungsbeispiel näher erläutert. Hierbei zeigt die einzige Figur eine Vorrichtung zur Montage von elektrischen Sicherungen.

Auf einem Stahlträger 1 sind etwa 20 bis 30 Sicherungskörper 2 aus Kunststoff nebeneinander angeordnet und mit Drahtstiften 3 auf dem Stahlträger 1 fixiert. Der Übersichtlichkeit halber sind in der Figur nur drei derartige Teile dargestellt. Entlang der oberen Enden der Drahtstifte 3 wird ein Draht 4 gelegt. Die Drahtstifte 3 sind an ihrem oberen Ende umgebogen oder besitzen Ösen, um den Draht 4 zu halten.

Ein Leistenbrenner 5 wird über eine Zuleitung 6 mit Wasserstoff, über eine Zuleitung 7 mit Sauerstoff und über eine Zuleitung 8 mit Erdgas versorgt. Die Zuleitungen 6, 7, 8 münden in eine Sammelleitung 9, über die dem Brenner 5 ein Gemisch aus den drei genannten Gasen zugeführt wird. Das Gasgemisch wird auf eine Vielzahl von Brenneraustrittsöffnungen verteilt und gezündet. Der Brenner ist so ausgelegt, daß die entstehenden Flammen 10 jeweils auf den Draht zwischen je zwei Sicherungskörpem 2 gerichtet sind. Durch die Flammen 10 wird so einerseits der Draht 4 an die der Flamme benachbarten Drahtstifte 3 gelötet und andererseits wird der Draht 4 zwischen zwei Sicherungskörpern durchtrennt.

Soll ein dicker Sicherungsdraht 4 an die Drahtstifte 3 der Sicherungskörper 2 gelötet werden, so ist es oftmals nötig, .die Durchtrennung des Drahtes 4 zwischen zwei Sicherungskörpem 2 mechanisch vorzunehmen. In diesem Fall wird der Leistenbrenner 5 lediglich für das Verlöten des Drahtes 4 mit den Drahtstiften 3 eingesetzt.

Der gesamte Prozeß wird mit Hilfe einer Kamera 11 überwacht. Reine Wasserstoff-Sauerstoff-Flammen sind mit der Kamera 11 allerdings nicht erkennbar. Daher wird dem Brenner 5 über Leitung 8 zusätzlich zu den beiden Hauptkomponenten Wasserstoff und Sauerstoff noch Erdgas zugeführt, welches bei der Verbrennung die Flammen 10 sichtbar macht. Das Erdgas wird in einer solchen Menge zugeführt, daß sein Anteil an der gesamten zugeführten Gasmenge etwa 2 Vol.-% beträgt.

Erst dieses Verfahren ermöglicht die Überwachung des Löt- und Trennvorganges mit Hilfe einer Kamera und damit eine automatische Qualitätskontrolle des Verfahrens.

## Patentansprüche

1. Verfahren zum zumindest teilweise Erhitzen von Bauteilen oder Werkstücken mit einem Brenner, dem Wasserstoff und Sauerstoff zugeführt werden, **dadurch gekennzeichnet, daß** dem Brenner (5) zusätzlich ein kohlenstoffhaltiges Gas (8) zugeführt wird.

2. Verfahren nach Anspruch 1, **dadurch gekennzeichnet, daß** dem Brenner (5) ein Gasgemisch aus Wasserstoff (6) und Sauerstoff (7) zugeführt wird.

3. Verfahren nach Anspruch 2, **dadurch gekennzeichnet, daß** dem Brenner (5) ein Gemisch aus Wasserstoff (6), Sauerstoff (7) und dem kohlenstoffhaltigen Gas (8) zugeführt wird.

4. Verfahren nach einem der Ansprüche 1 bis 3, **dadurch gekennzeichnet, daß** das kohlenstoffhaltige Gas (8) einen Anteil von 0,1 bis 10 Vol-%, bevorzugt 1 bis 5 Vol-%, an der dem Brenner insgesamt zugeführten Gasmenge hat.

5. Verfahren nach einem der Ansprüche 1 bis 3, **dadurch gekennzeichnet, daß** das kohlenstoffhaltige Gas einen Anteil von 3 bis 30 Vol-%, bevorzugt 10 bis 20 Vol-%, an der dem Brenner insgesamt zugeführten Gasmenge hat.

6. Verfahren nach einem der Ansprüche 1 bis 5, **dadurch gekennzeichnet, daß** dem Brenner (5) Erdgas, Methan und/oder Propan zugeführt wird.

7. Verfahren nach einem der Ansprüche 1 bis 6, **dadurch gekennzeichnet, daß** der Wasserstoff und der Sauerstoff aus Gasbehältern, insbesondere Druckgasflaschen, dem Brenner (5) zugeführt werden.

8. Verfahren nach einem der Ansprüche 1 bis 7 zur Verbesserung der Sichtbarkeit der Flammen (10) eines Leistenbrenners (5).

9. Verfahren nach einem der Ansprüche 1 bis 7 zum Feuerpolieren eines Glaskörpers.
